# EUROPEAN PATENT APPLICATION

(11) **EP 1 123 656 A2**
(43) Date of publication of application: **16.08.2001**
(21) Application number: 01100121.1
(22) Date of filing: 12.01.2001
(51) Int. Cl.: A21D 2/24

(54) **Bread products containing non-protein nitrogen**

(30) Priority: 10.02.2000 JP 2000033203
(71) Applicant: SNOW BRAND MILK PRODUCTS, CO., LTD., Sapporo-shi Hokkaido 065-0043 (JP)
(72) Inventor: Hamashita, Kazamusa, Kawagoe-shi, Saitama-ken (JP); Miyazawa, Hitoshi, Kawagoe-shi, Saitama-ken (JP); Serizawa, Atsushi, Kawagoe-shi, Saitama-ken (JP); Shimizu, Hirotaro, Houya-shi, Tokyo (JP)
(74) Representative: VOSSIUS & PARTNER

(57) **Abstract**

Bread products, which have an increased volume, fine texture, soft palatability, and excellent preservability, are produced by adding nonprotein nitrogen in an amount corresponding to 35-80 mgN per 100 g of bread.

## Description

The present invention relates to bread products containing a certain amount of nonprotein nitrogen. Bread products of the present invention are characterized by their increased volume, fine and smooth texture, soft palatability, and excellent preservability.

In bread production, gas generation which causes a dough to rise (fermentation), membrane formation which incorporates and retains the gas (kneading) and flavoring (fermentation, baking) are said to be important. In particular, in order to produce bread products having an increased volume, and excellent texture and palatability, a balance between the extensibility and tensile strength of the dough before baking is considered to be important. When bread products are produced on an industrial scale, the balance between extensibility and tensile strength of a dough is controlled by adding additives such as flour improvers, bread quality improvers and bread-making improvers. Examples of such additives include oxidizing agents which are capable of improving tensile strength of a dough, such as potassium bromate and L-ascorbic acid, emulsifying agents which are capable of improving dough extensibility, such as sucrose esters of fatty acids, fatty acid monoglycerides, organic acid monoglycerides and calcium stearoyl lactate, and further, enzymatic agents which are capable of improving dough extensibility.

The balance of extensibility and tensile strength of a dough is controlled by the use of these additives to produce bread products having an increased volume and excellent texture and palatability. However, the peculiar flavor of the added emulsifying agents may interfere with the flavor unique to bread products, and excessive action of enzymatic agents may lower the workability of a dough. Moreover, in recent years, the use of additives is not generally preferred by consumers. Therefore, a bread production method using additives as little as possible is in need.

The present inventors have conducted intensive studies to produce bread products having an increased volume and excellent texture and taste without using additives. As a result, the present inventors found that bread products having an increased volume and excellent texture and palatability can be produced by adding a certain amount of nonprotein nitrogen to the bread products, and thus completed the present invention.

In the present invention, the abovementioned problems can be solved by producing bread products with an addition of nonprotein nitrogen in an amount preferably corresponding to 35-80 mg nitrogen (hereinafter expressed as mgN) per 100 g of product (preferably at least 40 mgN, more preferably at least 50 mgN). Namely, by adding a certain amount of nonprotein nitrogen to bread products, the nonprotein nitrogen acts on dough to control the balance between extensibility and tensile strength of a dough and excellent membrane structure is formed in the dough so that proofing time during bread production can be shortened and the resulting bread products have an increased volume, fine texture and soft palatability.

In viewing the relation between the nonprotein nitrogen content and features of bread products in the present invention, a nonprotein nitrogen content of less than 35 mgN per 100 g of bread (without topping, filling, and glazing) is not preferable because it cannot maintain the balance between extensibility and tensile strength of a dough, yielding no effect in increasing the volume of the resulting bread. On the other hand, a nonprotein nitrogen content of more than 80 mgN per 100 g of bread (without topping, filling, and glazing) is also not preferable because it weakens extensibility and tensile strength of a dough resulting in a reduction in the volume. Accordingly, in the present invention, it is preferable to use nonprotein nitrogen compositions, which are prepared from milk or milk materials using ultrafiltration (UF) membranes, nanofiltration (NF) memberanes, or reverse osmotic (RO) membranes, to attain the nonprotein nitrogen content of 35-80 mgN per 100 g of bread.

Appropriate nonprotein nitrogen to be used in the present invention can be obtained by a technology pertaining to the Japanese Patent Application No. 10-277057, filed September 30, 1998, pertaining to a previous application by the present applicant. The application is herein incorporated by reference. For example, a nonprotein nitrogen composition is obtained by a process in which milk is fractionated into a fraction containing proteins having relatively large molecular weights (retentate) and a fraction containing no proteins, mainly lactose and salts, having relatively small molecular weights (permeate), using ultrafiltration, gel filtration or the like, and the permeate is subjected to fractionation precipitation, in which lactose is recrystallized, gel filtration, microfiltration, nanofiltration or the like to remove lactose to obtain the nonprotein nitrogen composition containing monovalent salts and nonprotein nitrogen components. This nonprotein nitrogen composition can be used in a form of a solution or a dry powder. In an embodiment, the above milk material has the following weight ratios: 1 to 50 of protein to nonprotein nitrogen; 2 to 20 of protein to lactose; 25 of protein to calcium; 50 of protein to sodium; and 0.2 to 0.4 of sodium to potassium.

When producing bread products according to the present invention, a nonprotein nitrogen composition is incorporated ultimately into a bread dough by adding the composition to flour or other ingredients in advance or in the process, for example. A nonprotein nitrogen composition may be added in an amount of approximately 40-150 mgN (preferably 60-100 mgN) as nonprotein nitrogen per 100 g of flour, depending on the type of flour and the type of bread.

Bread products in the present invention refer to products produced by a process in which a dough is prepared by mixing and kneading water and other ingredients with a grain powder, molded and then baked. Examples of bread products include bread (e.g., white bread, variety bread, table rolls), hard-baked bread (e.g., hard bread, hard rolls, pizzas), and dessert bread (e.g., bean-jam buns, fried buns, steamed bread). Preferably, bread products are wheat flour-based yeast-leavened products. Any method generally used in production of bread products can be used in the present invention.

A method of producing bread products will hereinafter be explained in detail using a representative method for bread production, i.e., an intermediate starter dough method (sponge and dough method). Bread products can be made by other methods including a straight method, rapid raising method, and amide method, for example, and a nonprotein nitrogen composition can be used or added as with other water-soluble additives.

In the sponge and dough method, a sponge is first prepared. The sponge mix is prepared by placing 70% by weight flour, 40-49% by weight water, 2-4% by weight fresh yeast, and yeast food, if appropriate, into a mixer and mixing at low speed (150-200 rpm) for 2 minutes and at medium speed (260-310 rpm) for 1-2 minutes, and then the preliminary fermentation is carried out (at 27C and 80% RH (relative humidity) for 2-3 hours). During the preliminary fermentation, gas is removed when 2/3 of the fermentation period has elapsed. The sponge is thus prepared.

Examples of wheat flours include a hard wheat flour, semi-hard wheat flour and soft wheat flour. Furthermore, depending on the intended final products, rye flour, corn flour, buckwheat flour, whole rice flour, oatmeal, gluten, gliadin can be added. Both fresh yeast and dry yeast can be used. When dry yeast is used, an amount corresponding to 1/3-1/2 the amount of fresh yeast is preferably used.

Next, 30% by weight wheat flour, 2.20-5.10% by weight nonprotein nitrogen composition prepared from milk or milk materials, 0.5-2% by weight table salt, 3-5% by weight sugars such as sucrose, glucose and starch sugar, and 18-21% by weight water are added to the sponge thus prepared. The admixture is mixed and kneaded at low speed for 2 minutes and at medium speed for 3-5 minutes, and further with the addition of 4-6% by weight oil and fat, at low speed for 2 minutes, at medium speed for 2-4 minutes and at high speed (370-480 rpm) for 2-3 minutes to prepare a bread dough (27-28C). This dough is fermented in a fermentation bath (at 38C and 80-85% RH for 30-60 minutes), and then divided into about 450 g portions and made into balls. The dough is benched for 15-20 minutes, molded with a molder, placed in a pan (1500 ml volume), proofed (at 38C and 80-85% RH for 50-60 minutes, and then baked at 200-220C for 20-23 minutes.

Further, depending on the intended final products, shortening, butter, margarine, lard, or salad oil can be incorporated into the sponge dough. Oils having plasticity may also be included. Furthermore, skim milk powder, lemon or orange peels, dry fruits such as raisins, dried apricots, nuts such as almond and cashew nuts can be added.

### [Reference Example 1]

Skimmed milk (50 kg) was treated with a microfilter (MF) to remove bacteria. The resulting milk was concentrated 5 times using a UF membrane (HFK-131, a product of Koch) with a fractionation molecular weight of 10 KDa to prepare UF-concentrated milk.

A permeate fraction obtained in the UF membrane treatment of skimmed milk was recovered and concentrated 3 times using a nanofiltration (NF) membrane (Desal-5, a product of Desalination) with a salt suppressing rate of 50%. The permeate fraction thus obtained (nanofiltration permeate, abbreviated to NFP) was recovered.

This NFP and the previously prepared UF-concentrated milk were mixed at a ratio of NFP:UF-concentrated milk = 1:5 by weight, and the mixture was spray-dried to obtain a nonprotein nitrogen composition from skimmed milk. The nonprotein nitrogen content of this composition was 2.4 g per 100 g of milk material.

### [Example 1]

Water (0.86 kg) and a hard wheat flour (1.4 kg) (Kameria, a product of Nisshin Flour Milling Co., Ltd.) were placed in a mixer (CS-20, a product of Kanto Kongo-ki Kogyo Co., Ltd.), and mixed at low speed (150 rpm) for 1 minute and with the addition of 0.026 kg of dry yeast (saf-instant, a product of Nichifutsu Shoji) at medium speed (260 rpm) for 2 minutes to prepare a sponge mix. This sponge dough was subjected to a preliminary fermentation in a fermentation bath (62-EXC, a product of Kyodo Dennetsu) at 27C and 80% RH for 2.5 hours), during which gas was removed after 1 hour and 20 minutes, and thus the sponge was prepared.

Next, the sponge, 0.6 kg of hard wheat flour, 0.00293 kg of nonprotein nitrogen composition prepared in Reference Example 1, 0.04 kg of table salt, 0.08 kg of sucrose, and 0.416 kg of water were placed in a mixer and mixed at low speed for 2 minutes and at low to medium speed (200 rpm) for 4 minutes. Next, with the addition of 0.08 kg of shortening (Bread Mate #100, a product of Snow Brand Milk Products Co., Ltd.), mixing was continued at low speed for 2 minutes and at medium speed for 4 minutes to obtain a dough (finishing kneading temperature: 27C). This dough was fermented in a fermentation bath at 27C and 80% RH for 1 hour. After the fermentation, the dough was divided into 450 g portions, made into balls and benched at room temperature (25-26C) for 15 minutes. Then the dough was molded with a molder, placed in a pan (1500 ml volume), proofed again in a fermentation bath at 38C and 80% RH for fermentation until the dough rose 20 mm above the shoulder of the pan, then baked in a oven at 210C for 23 minutes to obtain bread (product 1 of the present invention).

The content of nonprotein nitrogen was 53 mgN per 100 g of bread.

### [Comparative Example 1]

Bread (comparative product 1) was made in the same manner as described in Example 1 except that the nonprotein nitrogen compound prepared in Reference Example 1 was not added. The content of nonprotein nitrogen in comparative product 1 was 24 mgN per 100 g of bread.

### [Comparative Example 2]

Bread (comparative product 2) was made in the same manner as described in Example 1 except that skimmed milk was added in place of the nonprotein nitrogen compound prepared in Reference Example 1. The content of nonprotein nitrogen in comparative product 2 was 29 mgN per 100 g bread.

### [Test Example 1]

The specific volume and hardness were measured and an organoleptic evaluation for texture and palatability and a preservation test were carried out for product 1 of the present invention, comparative product 1 and comparative product 2.

### (1) Measurement of specific volume

The specific volume was obtained by measuring the volume of bread by the rapeseed displacement method (E.J. Pyler, Baking Science & Technology, Vol. II, p892, 1973), measuring the weight of bread, and then dividing the volume by the weight for calculation of the specific volume (ml/g).

### (2) Measurement of hardness

Each sample was placed in a polyethylene bag and the bag was sealed with a sealer and placed in a thermostatic bath at 20C overnight. The samples thus prepared were sliced into 18 mm thick slices which were compressed down to 3 mm in thickness with a plunger (the bottom area: 6.45 cm²) to measure stress (gf/cm²), which was regarded as hardness, using Baker's compressimeter (a product of Chiyoda Seisakusho. K.K.).

### (3) Organoleptic evaluation

An organoleptic evaluation for texture (fineness) and palatability (softness) of each bread sample sliced into 18 mm thick slices was carried out by 10 expert panelists. Results of the evaluation were evaluated according to the standard expressed by scores for texture, i.e., very preferable with fine texture (5 points), good with moderately fine texture (4 points), average (3 points), bad with moderately coarse texture (2 points), and very bad with coarse texture (1 point); and scores for palatability, i.e., very good with sufficient softness (5 points), good with moderate softness (4 points), average (3 points), bad with moderate hardness (2 points), and very bad with hardness (1 point). All averages were rounded off to the second decimal place.

### (4) Preservation test

Each sample was placed in a polyethylene bag and the bag was sealed with a sealer and placed in a thermostatic bath at 20C for 3 days, and the hardness was then measured. The hardness was measured by the method described in (2) above.

Results are shown in Table 1.

**Table 1**

| | Product 1 of the present invention | Comparative product 1 | Comparative product 2 |
|---|---|---|---|
| Specific volume (ml/g) | 5.93 | 5.53 | 5.30 |
| Hardness (gf/cm²) | 18.1 | 23.0 | 21.0 |

| Organoleptic evaluation | | | |
|---|---|---|---|
| Texture | 4.7 | 3.8 | 4.3 |
| Palatability | 4.7 | 3.2 | 3.8 |

| Preservation test | | | |
|---|---|---|---|
| After 3 days preservation | 28.5 | 37.0 | 33.6 |

As compared to comparative product 1 and comparative product 2, the product 1 of the present invention had a greater specific volume, accordingly, an increased volume and a smaller hardness value, and was evaluated to be softer by the organoleptic - evaluation. Also, the product 1 of the present invention showed a smaller hardness value than the comparative products, after 3 days of preservation.

### [Effectiveness of the Invention]

According to the present invention, bread products having an increased volume, fine texture and soft palatability, and excellent preservability, can be provided.

Bread products of the present invention contain a certain amount of nonprotein nitrogen. This nonprotein nitrogen increases the volume, improves the texture and palatability, and prevents ageing, i.e., hardening, during storage to improve preservability of the bread products.

## Claims

1. A bread product containing nonprotein nitrogen in an amount corresponding to 35-80 mgN per 100 g of bread without topping, filling, and glazing.

2. A bread product according to Claim 1, which comprises a milk-derived nonprotein nitrogen.

3. A bread product according to Claim 1, which is a wheat flour-based yeast-leavened product.

4. In a method of producing a bread product, wherein the improvement comprises incorporating a nonprotein nitrogen composition into a bread dough in an amount of 40-150 mgN as nonprotein nitrogen per 100 g of flour.
